# EUROPÄISCHE PATENTANMELDUNG

(11) **EP 4 227 455 A1**
(43) Veröffentlichungstag der Anmeldung: **16.08.2023**
(21) Anmeldenummer: 23153028.8
(22) Anmeldetag: 24.01.2023
(51) Int. Cl.: D01G 15/28, D01G 31/00, D01G 15/16

(54) **KARDE**

(30) Priorität: 11.02.2022 CH 1252022
(71) Anmelder: Maschinenfabrik Rieter AG, 8406 Winterthur (CH)
(72) Erfinder: ANDEREGG, Peter, 8400 Winterthur (CH); SAUTER, Christian, 8247 Flurlingen (CH); WALTHER, Thomas, 8406 Winterthur (CH)

(57) **Zusammenfassung**

Die Erfindung betrifft ein Verfahren zum Betreiben einer Karde sowie eine Karde (1).

Die Karde (1) ist mit einem Maschinenrahmen (30) und mit einer Steuerung (27) und mit einem auf seiner äusseren Oberfläche (17) mit einer Garnitur (18) versehenen Tambour (4) und mit Arbeitselementen (12), welche der äusseren Oberfläche (17) des Tambours (4) gegenüberliegend angeordnet sind, versehen, wobei der Tambour (4) in einer Längsachse (14) mit zwei Achsstummeln (19, 20) oder einer durchgehenden Achse (21) mit einem ersten Ende (15) und einem in der Längsachse (14) gegenüberliegenden zweiten Ende (16) ausgebildet ist. An zumindest einem der Achsstummel (19, 20) oder an zumindest dem ersten Ende (15) der Achse (21) ist ein Beschleunigungssensor (24) zur Messung von Körperschall stirnseitig angebracht.

## Beschreibung

Die vorliegende Erfindung betrifft eine Karde mit einem Tambour mit einer Längsachse, mit einem Umfang und mit einer Länge, wobei der Tambour auf seiner äusseren Oberfläche mit einer Garnitur versehen ist. Die Karde weist Elemente auf, welche der äusseren Oberfläche des Tambours gegenüberliegend angeordnet sind. Der Tambour ist als Hohlzylinder mit einer Tambourwandung und in der Längsachse mit zumindest zwei Achsstummeln oder einer durchgehenden Achse ausgebildet, wobei die Achsstummel oder die Achse durch Speichen oder Scheiben mit der Tambourwandung verbunden sind.

In einer Karde bildet der Wanderdeckelbereich zusammen mit dem Tambour die Hauptkardierzone und hat als Funktion die Auflösung der Faserflocken zu Einzelfasern, Ausscheidung von Verunreinigungen und Staub, Eliminierung von sehr kurzen Fasern, die Auflösung von Nissen und die Parallelisierung der Fasern. Je nach Anwendung einer Karde werden dabei Festdeckel, Wanderdeckel oder eine Mischung aus Fest- und Wanderdeckel eingesetzt. Zwischen den Garnituren (Nadelspitzen) der Wanderdeckel und der Garnitur (Sägezahn) des Tambours formt sich ein enger Spalt, der Kardierspalt genannt wird. Er ergibt sich beim Einsatz von Wanderdeckeln, indem die Wanderdeckel, geführt durch bogenförmige Leisten - sogenannte Flexibelbogen, Regulierbogen, Flexbogen oder Gleitbogen -, in einem durch diese Leisten bestimmten Abstand, in Umfangsrichtung des Tambours entlanggeführt werden. Die Grösse des Kardierspaltes liegt bei einer Wanderdeckelkarde typischerweise zwischen 0.10 bis 0.30 mm für Baumwolle oder bis 0.40 mm für Chemiefasern. Eine Berührung der sich gegenüberliegenden Elemente ist jedoch zu vermeiden, da dies regelmässig zu Schäden an den Wanderdeckeln wie auch des Tambours führen kann. Dadurch ist eine Bestimmung des tatsächlichen Kardierspaltes von grosser Wichtigkeit.

Um bei einer Karde ein möglichst effiziente Kardierwirkung zu erzielen, ist es notwendig den Kardierspalt insbesondere in der Hauptkardierzone zwischen der Garnitur des Wanderdeckels und der Garnitur des Tambours möglichst klein zu halten. Die Garnitur des Tambours wird durch spezielle Aufziehverfahren und Befestigungsverfahren auf der äusseren Oberfläche des Tambours der Karde aufgebracht. Zur Erzielung von hohen Produktionsmengen wurden die Drehzahlen der Tambouren in den letzten Jahren immer mehr erhöht. D.h. inzwischen werden Tambouren mit Drehzahlen von über 600 U/min eingesetzt. Durch die Erhöhung der Drehzahlen werden die Zentrifugalkräfte am Tambour der Karde erhöht, welche ungleichmässige elastische Verformungen im Durchmesserbereich des Tambours der Karde herbeiführen bedingt durch die auftretenden ungleichmässigen Spannungen. Durch die auftretenden beschriebenen ungleichmässigen elastischen Verformungen im Trommelbereich kann sich der im Ruhezustand eingestellte Kardierspalt im Betriebszustand verändern was zu Verschlechterungen der Kardierung durch Verlust an Kardierfläche wie auch zu Kollisionen der Garnituren und somit zu Beschädigungen der Garnituren führen kann. Grundlage für eine Einstellung des Kardierspaltes ist das Wissen wann dieser Null ist, also eine Berührung der sich gegenüberliegenden Bauteile erfolgt. Auf diese Weise kann eine einfache Eichung vorhandener Einstellvorrichtungen erfolgen. Durch diese exakte Kontaktfeststellung kann einerseits eine exakte Einhaltung des Kardierspaltes erreicht werden und andererseits eine Beschädigung der Bauteile vermieden werden.

Es sind verschiedene Vorrichtungen und Verfahren bekannt, welche zur Bestimmung des Kardierspaltes respektive einer Berührung der sich gegenüberliegenden Bauteile Anwendung finden. Beispielsweise ist in der DE 10 2006 002 812 A1 ist eine Vorrichtung und ein entsprechendes Verfahren zur Bestimmung des Kardierspaltes beschrieben. Bei einer Spinnereivorbereitungsmaschine, insbesondere einer Karde, Krempel oder dergleichen, werden zur Überwachung und/oder Einstellung von Abständen und Bauteilen, bei der eine garnierte, schnell rotierende Walze mindestens einem garnierten und/oder nicht garnierten Bauteil gegenüberliegt und der Abstand zwischen den einander gegenüberliegenden Bauteilen änderbar ist, gegeneinander elektrisch isoliert. Als jeweilige Kontaktelemente sind diese Bauteile an einen elektrischen Stromkreis angeschlossen, in dem sich ein Messglied zur Kontaktfeststellung befindet. Die garnierte, schnell rotierende Walze ist beispielsweise ein Tambour einer Karde, wobei das gegenüberliegende, garnierte und/oder nicht garnierte Bauteil beispielsweise eine Abnehmerwalze, ein Wanderdeckel oder eine Leitfläche aufweisendes Verschalungssegment sind. Zwischen der Walze und dem beabstandet angeordneten Bauteil befindet sich der sogenannte Kardierspalt. Dieser Kardierspalt ist sehr eng und kann sich beispielsweise während des Betriebs der Maschine durch eine Erwärmung der Bauteile verändern. Dabei kann es zu Kontakten zwischen der schnell rotierenden Walze und dem gegenüberliegenden Bauteil kommen. Derartige Kontakte sind möglichst zu vermeiden.

In der DE 10 2006 002 812 A1 wird zur Abhilfe dementsprechend vorgeschlagen, einen unerwünscht häufigen Kontakt zwischen den Bauteilen und damit einen Garniturschaden zu vermeiden, indem die Menge der Kontakte ermittelt wird, wodurch eine Anzeige bzw. Reaktion bei nur einem dieser Kontakte oder bei nur geringem Kontakt vermieden wird. Insbesondere wird dadurch eine unerwünschte Abschaltung der Maschine vermieden. Um dies zu erreichen, wird eine Bewertung der Anzahl der Kontakte einer bestimmten Kontaktdauer, z.B. einer Kontaktdauer von 0,1 ms, 1 ms oder 2 ms gefiltert. Hierfür ist eine Zähleinrichtung vorhanden, welche die Anzahl der Kontakte zwischen einer Kardengarnitur und einer Garniturleiste pro Zeiteinheit ermittelt. Diese Anzahl bzw. Menge der Kontakte wird zur weiteren Auswertung und zur daraus resultierenden Reaktion, beispielsweise zum Anhalten der Karde oder zum weiteren Betrieb der Karde verwendet.

Weiter offenbart die CH 695 351 A5 eine Vorrichtung, um eine Berührung zwischen zwei Bauteilen festzustellen. Es ist ein Kontakt zwischen den Spitzen der Garnitur der als mindestens ein Wanderdeckelstab ausgebildeten Gegenfläche und den Spitzen der Garnitur der als Tambour ausgebildeten Walze durch Verlagerung der Wanderdeckelstäbe herstellbar dabei ist dieser Kontakt durch eine sensorische Einrichtung feststellbar, wobei für die Feststellung des Kontaktes eine Schallmessung eines auf die Maschine übertragenen Körperschalls oder eine Widerstand- oder Strommessung in einem durch die sich berührenden Bauteile angelegten Stromkreis herangezogen wird.

Es sind auch verschiedene berührungslose Messverfahren und entsprechende Vorrichtungen zum Ermitteln des Abstandes respektive einer Berührung von Garniturspitzen in Textilmaschinen bekannt. So ist beispielsweise in der DE 42 35 610 A1 ein induktiver Sensor offenbart, der dem Wanderdeckel einer Karde zugeordnet ist und der Garnitur des Tambours gegenüberliegt. In der DE 102 51 574 A1 ist ein optischer Sensor beschrieben, der den Abstand zwischen den freien Enden der Garnituren sowie entsprechenden Bezugsflächen zu erfassen vermag. Die DE 39 13 996 A1 offenbart ebenfalls berührungslose Sensoren, wobei hier kapazitive, induktive sowie optische Sensoren genannt sind.

Ebenfalls kommen indirekte Messverfahren zur Anwendung. Indirekte Messmethoden sind solche, bei denen nicht der unmittelbare Abstand, der sich gegenüberliegenden Garniturspitzen, gemessen wird. Ein Beispiel hierfür ist in der oben genannten DE 42 35 610 A1 beschrieben, welche eine Abstandsmessung der Garnitur des Tambours zu einem Wanderdeckelstab, in dem lediglich die Sensoren untergebracht sind, offenbart. Entsprechend der DE 39 13 996 A1 sind an den Stirnseiten der Garnituren Fühler vorgesehen, die dem Tambour zugeordnet sind und den Abstand zu gegenüberliegenden Gegenstücken am Wanderdeckel messen. Auch ist es bekannt, den Abstand der Gleitschuhe, die über Wanderdeckelköpfe an den Wanderdeckelstäben angebracht sind, zur Wanderdeckelgarnitur zu ermitteln. Aus diesen indirekten Abstandsmessungen wird dann auf den unmittelbaren Abstand der Garniturspitzen geschlossen, wodurch eine Berührung festgestellt werden kann.

Die bekannten Verfahren und Messmethoden haben den Nachteil, dass eine Bestimmung einer Berührung nur mit einem grossen technischen Aufwand.

Die Aufgabe der Erfindung ist es die Nachteile des Standes der Technik zu beheben und eine Feststellung einer Berührung von zwei sich gegenüberliegenden Bauteilen resp. Garnituren mit einer hohen Genauigkeit zu ermöglichen.

Die Aufgabe wird durch die Merkmale im kennzeichnenden Teil des unabhängigen Patentanspruchs gelöst.

Zur Lösung der Aufgabe wird eine neuartige Karde vorgeschlagen mit einem Maschinenrahmen und mit einer Steuerung und mit einem auf seiner äusseren Oberfläche mit einer Garnitur versehenen Tambour und mit Arbeitselementen, welche der äusseren Oberfläche des Tambours gegenüberliegend angeordnet sind. Der Tambour ist in einer Längsachse mit zwei Achsstummeln oder einer durchgehenden Achse mit einem ersten Ende und einem in der Längsachse gegenüberliegenden zweiten Ende ausgebildet. An zumindest einem der Achsstummel oder an zumindest einem Ende der Achse ist ein Beschleunigungssensor zur Messung von Körperschall stirnseitig angebracht. Damit ist der Beschleunigungssensor an einem sich drehenden Element angebracht, wobei das Element eine mit der äusseren Oberfläche des Tambours synchrone Drehbewegung ausführt. Durch den Beschleunigungssensor wird der sich durch die bewegenden Bauteile ergebende Körperschall gemessen. Wenn sich die bewegten Bauteile respektive deren Oberflächen oder Garnituren nahekommen, werden die Bauteile und die sich in unmittelbarer Nähe der Bauteile befindliche Luft in Schwingung versetzt. Diese Schwingung wird durch die Bauteile weitergeleitet und als Körperschall bezeichnet. Beispielsweise erzeugt eine Berührung zwischen einem Arbeitselement der Garnitur (Sägezähne) des Tambours ein charakteristisches Geräusch. Ist das Arbeitselement als ein Wanderdeckel mit einer durch Nadeln gebildeten Garnitur ausgestaltet, wird bereits bei einer Berührung einzelner Nadeln einer Garnitur eines Wanderdeckels und einzelnen Sägezähnen der Garnitur des Tambours ein Körperschall erzeugt. Die Intensität und die Frequenz dieses Körperschalls sind abhängig von verschiedenen Maschinen- und Prozessparametern, wie beispielsweise: eine Geschwindigkeit der Bauteile selbst oder relativ zueinander, die Art, Form und Beschaffenheit der Oberflächen der Bauteile, dem Material der Bauteile und nicht zuletzt auch einer tatsächlichen Berührung der aneinander vorbei bewegten Bauteile. Insbesondere sind für die Intensität (Amplitude) und Frequenz die Periodizität der Sägezahngarnitur des Tambours, eine Tambourdrehzahl und ein Tambourdurchmesser bestimmend.

Der Körperschall wird verursacht beim Berühren der Nadeln der Wanderdeckelgarnitur mit den Sägezähnen der Tambourgarnitur. Um ein möglichst gutes Signal zu erfassen, ist es von Vorteil, wenn der Körperschallsensor möglichst nahe beim Entstehungspunkt des Körperschalls angebracht wird. Alle Übergänge und vor allem Lager wirken für das Körperschallgeräusch wie ein Filter, wodurch nur noch ein Teil des tatsächlich erzeugten Körperschalls durch den Sensor erfasst werden kann. Dazu kommen Lagergeräusche, welche einen Grundgeräuschpegel verursachen. Durch Filterung der in Form von Körperschall gemessenen Schallemissionen gelingt es, das Körperschallgeräusch der Lagergeräusche oder anderer Bauteile der Karde zu eliminieren, damit eine Berührung erkannt werden kann.

Dadurch dass die vorgesehene Anordnung des Beschleunigungssensors an einem der Achsstummel oder an einem Ende der Achse, ist der Beschleunigungssensor an einem drehenden Element angebracht. Dadurch hat der am Umfang des Tambours erzeugte Körperschall keine oder wenige Materialübergänge zwischen dem Ort der Erzeugung und dem Ort der Messung zu überwinden, wodurch Störgeräusche, wie sie beispielsweise durch die Lagerung entstehen, weitgehend ausgeblendet werden können. Ein Anbringen des Beschleunigungssensors am drehenden Element hat auch den Vorteil, dass die Messung des Körperschalls immer an der gleichen Position in Bezug auf die äussere Oberfläche des Tambours erfolgt und dadurch bestimmt werden kann, wo die Berührung in Bezug auf die äussere Oberfläche stattgefunden hat.

Dadurch dass der Beschleunigungssensor direkt an der Achse oder am Achsstummel befestigt ist, wird ein, durch den Körperschall zu durchlaufender, Übergang von einem sich drehenden Element auf ein stehendes Element vermieden. Vorteilhafterweise ist am zweiten Achsstummel oder am zweiten Ende der Achse ein weiterer Beschleunigungssensor angeordnet. Eine Anordnung von mehreren Beschleunigungssensoren begünstigt eine fehlerfreie Feststellung von Berührungen. Eine Verdoppelung der Beschleunigungssensoren ermöglicht die Erfassung geringster Berührungen, beispielsweise ein Touchieren einer einzelnen Nadel einer Wanderdeckelgarnitur mit einer Spitze eines Sägezahns der Tambourgarnitur. Damit gelingt es kleinste Berührungen der beiden Garnituren zu erkennen und entsprechende Gegenmassnahmen einzuleiten.

Durch eine Ausrüstung des Trommelantriebs mit einer Drehwinkelmessung durch einen sogenannten Indexsensor kann bei jeder einzelnen Umdrehung des Tambours die Lage der Sensoren relativ zur Maschine erfasst werden. Der Indexsensor gibt bei jeder Umdrehung des Tambours jeweils die Position (Azimut) 0° an. Somit ist jederzeit eine exakte Position der Sensoren gemessen in einem Drehwinkel um die Längsachse des Tambours bekannt. Damit kann bei Auftreten einer Berührung durch eine entsprechende Auswertung der Messungen des Körperschalls beispielsweise festgestellt werden, welcher der an einer Oberfläche des Tambours entlanglaufenden Wanderdeckelstäbe diese Berührung verursacht hat. Es ist auch möglich festzustellen, ob die gemessenen Berührungen durch eine ungleichmässige Ausdehnung des Tambours erfolgt sind.

Ebenfalls kann die Position nicht nur über den Umfang des Tambours verortet werden, sondern auch in seiner Länge festgelegt werden. Dies gelingt durch die Anordnung der zwei Beschleunigungssensoren an entgegengesetzten Enden der Achse oder an sich gegenüberliegenden Achsstummeln. Auf diese Weise kann beispielsweise festgestellt werden, dass sich durch eine Verbiegung der Wanderdeckelstäbe, beispielsweise aufgrund einer zu hohen Temperaturentwicklung, eine Berührung der Garnitur der Wanderdeckelstäbe mit der Tambourgarnitur in einem bestimmten Bereich der Länge des Tambours ereignet hat oder häuft.

Bevorzugterweise weisen die Beschleunigungssensoren einen Messbereich von 10kHz bis 500 kHz auf. Erfahrungsgemäss ist der durch Berührungen zwischen den Nadeln der Wanderdeckelstäbe und der Garnitur des Tambours erzeugte Körperschall in einem Bereich von 10kHz bis 300 kHz. Ein grösserer Messbereich würde einen entsprechend höheren Aufwand an Filtern bedeuten, um die Störgeräusche zu eliminieren. Bevorzugterweise ist eine Auswertung in einem Bereich von 10 kHz bis 300 kHz vorgesehen. In einer spektralen Analyse wird eine Hauptkomponente des durch die Berührungen von Nadeln und Sägezähnen erzeugten Körperschalls in einem Frequenzbereich von 10 bis 30 kHz ausgewertet.

Vorteilhafterweise ist eine Auswerteeinheit vorgesehen ist, welche bei einem Überschreiten eines bestimmten Schallpegels eine Anzeige zur Visualisierung und zur Weiterleitung eines Signals an eine Steuerung der Karde vorgesehen. Die Auswerteeinheit nimmt die Signale der Beschleunigungssensoren auf und wertet diese dahingehend aus, dass eine tatsächliche Berührung zwischen den Bauteilen erkannt werden kann. Vorteilhafterweise ist die Auswerteeinheit am Maschinenrahmen orts- und drehfest befestigt. Umso näher die Auswerteeinheit an den Messungen angebracht ist, desto einfacher ist die Auswertung selbst.

Die Signalübertragung vom Beschleunigungssensor zur Auswerteeinheit kann konventionell über einen Schleifkontakt erfolgen. Es ist jedoch von Vorteil, wenn eine drahtlose Signal-Übertragung zwischen dem Beschleunigungssensor und der Auswerteeinrichtung vorgesehen ist. Bei einer drahtlosen Übertragung ergeben sich keine Abnutzungen der Übertragungselemente und die Technik kann wartungsfrei angewendet werden. Zudem ergibt sich durch diese Anordnung die Sicherheit einer drahtgebundenen Signal-übertragung des ausgewerteten Messsignals an die Steuerung.

Dasselbe Prinzip gilt für die notwendige Energieversorgung der Beschleunigungssensoren und der Auswerteeinheit. Die Energieversorgung kann ebenfalls konventionell über Schleifkontakte erfolgen. Es ist jedoch von Vorteil, wenn eine Energiezuführung zu den Beschleunigungssensoren und / oder der Auswerteeinrichtung durch einen offenen rotierenden Transformator oder einen offenen Elektromotor vorgesehen ist. Diese Energieversorgungen zwischen stehenden und drehenden Bauteilen ist Stand der Technik und hat sich in seiner Anwendung bewährt. Von Vorteil ist es jedoch, wenn eine induktive Energieübertragung durch drahtlose Lademodule vorgesehen ist. Drahtlose Lademodule nutzen ein elektromagnetisches Feld, um Energie zwischen zwei Objekten zu übertragen. Die Energie wird über eine induktive Kopplung an ein elektrisches Gerät gesendet, das diese Energie dann zum Laden von Batterien oder zum Betreiben des Gerätes nutzen kann.

Durch eine entsprechende Auswertung der Messungen des Körperschalls können Berührungen zwischen der Oberfläche des Tambours respektive der sich auf der Oberfläche befindlichen Garnitur mit den unterschiedlichsten dem Tambour gegenüberliegenden Bauteile festgestellt werden. Dabei können die dem Tambour gegenüberliegenden Bauteile als Messer, Leitbleche, Kardierelemente, Wanderdeckel oder garnierte Walzen ausgebildet sein.

Weiter ist es von Vorteil, wenn eine Eingabeeinrichtung und/oder eine Erkennungseinrichtung zur Eingabe bzw. Erkennung des Garniturtyps der Garnitur des Tambours, der Oberflächenstruktur der gegenüberliegenden Teile, und/oder von produktionsabhängigen Größen, insbesondere der Produktionsrate, der Art und/oder der Feuchtigkeit der Fasern, vorgesehen ist. Dadurch wird die Auswertung der Messung des Körperschalls verbessert. Die Steuerung respektive deren Software kann diese die Körperschallerzeugung beeinflussenden Faktoren in der Auswertung der Resultate der Messungen der Beschleunigungssensoren berücksichtigen und entsprechend eine genauere Signalisierung von Gefahrenpotentialen erzeugen. Insbesondere sind für die Intensität (Amplitude) und Frequenz die Periodizität eine Sägezahngarnitur des Tambours, eine Tambourdrehzahl und ein Tambourdurchmesser bestimmend.

Weiter wird ein Verfahren zum Betreiben einer Karde, welche nach obiger Beschreibung ausgebildet ist, vorgeschlagen. Aus dem gemessenen Körperschall wird in einer Auswerteeinheit ein Schallpegel gebildet wird und eine Berührung der Garnitur des Tambours mit dem gegenüberliegenden Arbeitselement bestimmt

Bevorzugterweise wird bei einem Überschreiten eines oberen Grenzpegels oder bei einem Überschreiten einer bestimmten Dauer eines unteren Grenzpegels die Karde ausgeschaltet. Es ist vorteilhaft, mögliche Crashs vorherzusehen, um entsprechend reagieren zu können, damit Maschinenschäden verhindert oder minimiert werden. Mit der Körperschallüberwachung ist dies bei entsprechenden Umständen möglich. Durch einen Crash wird ein starkes Körperschallgeräusch verursacht. Stellt man den Schallverstärker respektive die Auswertung so ein, dass beim normalen Betrieb die Crash-Schwelle nicht überschritten wird, ist der entsprechende Ausgang als Crash-Detektion nutzbar. Der korrespondierende Eingang der Maschinensteuerung muss schnell sein um entsprechend zu reagieren, beispielsweise durch ein Abschalten einer Materialzuführung, eine Drehzahlreduktion oder Abschaltung des Tambours oder ein Anheben des dem Tambour gegenüberliegenden Bauteils. Wird ein unterer Grenzpegel dauerhaft unterschritten, ist darauf zu schliessen, dass entweder keine Kardierung erfolgt oder die Beschleunigungssensoren ausgefallen sind. Aus Sicherheitsgründen wird auch in einem derartigen Fall die Karde ausgeschaltet, da nicht mehr sichergestellt ist, dass eine folgenschwere Berührung rechtzeitig erkannt werden kann.

Weitere Vorteile der Erfindung sind in den nachfolgenden Ausführungsbeispielen beschrieben. Es zeigen:
- Figur 1: eine schematische Darstellung einer Karde nach dem Stand der Technik;
- Figur 2: eine schematische Darstellung eines Tambours nach der Erfindung in einer ersten Ausführungsform;
- Figur 3: eine schematische Darstellung eines Tambours nach der Erfindung in einer zweiten Ausführungsform und
- Figur 4: eine schematische Darstellung einer Verfahrensanordnung nach der Erfindung.

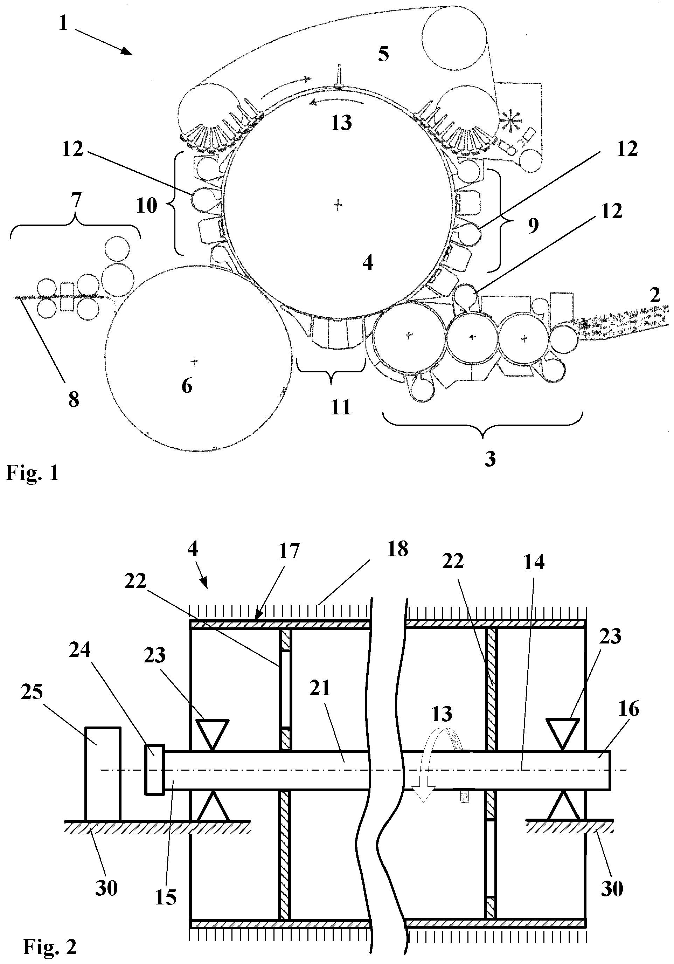

Figur 1 zeigt in einer schematischen Darstellung eine Karde 1 nach dem Stand der Technik. Fasergut 2 gelangt nach dem es verschiedene Prozessstufen einer Putzerei durchlaufen hat in einen Vorreisser 3. Das Fasergut 2 wird durch die im Vorreisser 3 enthaltenen Walzen und Arbeitselemente 12 geöffnet und gleichzeitig von einem Teil der darin enthaltenen Verunreinigungen befreit. Die letzte Vorreisserwalze des Vorreissers 3 übergibt das Fasergut schliesslich an den Tambour 4 der Karde 1, welche das Fasergut vollständig in Einzelfasern auflöst, reinigt und parallelisiert. Der Tambour 4 arbeitet dazu mit Wanderdeckeln 5 und anderen verschiedenen Arbeitselementen 12 zusammen. Der Tambour 4 wird in einer Drehrichtung 13 bewegt und führt die Fasern vom Vorreisser 3 zum Abnehmer 6. Dabei werden die Fasern durch eine Vorkardierzone 9, anschliessend an den Wanderdeckeln 5 vorbei und über eine Nachkardierzone 10 zum Abnehmer 6 gefördert. In der Vorkardierzone 9 wie auch der Nachkardierzone 10 werden Arbeitselemente 12 eingesetzt. Als Arbeitselemente 12 werden in der Vorkardierzone 9 und der Nachkardierzone 10 unter anderem Kardierelemente zur Parallelisierung der Fasern und Ausscheideelemente zur Ausscheidung von Trash-Teilen und Kurz-Fasern genutzt. Zwischen dem Abnehmer 6 und dem Vorreisser 3 durchläuft das auf dem Tambour verbliebene Fasergut in Drehrichtung 13 des Tambours 4 gesehen noch eine Unterkardierzone 11. In der Unterkardierzone 11 werden heute meist keine Ausscheideelemente eingesetzt. Nachdem die Fasern zum Teil mehrere Umläufe auf dem Tambour 4 durchgeführt haben, werden sie vom Abnehmer 6 in Form eines Faservlieses von der Tambour 4 abgenommen und mit einer Bandbildungseinheit 7 zu einem Kardenband 8 umgeformt. Das Kardenband 8 wird anschliessend in eine Kanne für den Weitertransport abgelegt (nicht gezeigt).

Figur 2 zeigt eine schematische Darstellung eines Tambours 4 nach der Erfindung in einer ersten Ausführungsform. Der Tambour 4 ist als Hohlzylinder mit einer Längsachse 14 und einer äusseren Oberfläche 17 ausgebildet. Zur Stützung des Hohlzylinders sind zwei Speichen 22 in den Hohlzylinder eingebracht, welche den Hohlzylinder mit einer innenliegenden über die gesamte Längsachse 14 des Tambours 4 durchgehende Achse 21 verbindet. An beiden Achsenden 15 und 16 ist eine Lagerung 23 des Tambours 4 vorgesehen. In diesen Lagern 23 ist der Tambour 4 in einem Maschinenrahmen 30 gehalten und dreht sich im Betrieb in Drehrichtung 13. Auf der äusseren Oberfläche 17 des Tambours ist eine Garnitur 18 aufgebracht. Derartige Garnituren 18 sind meist als Sägezahngarnituren ausgebildet und werden in Drahtform auf den Tambour 4 aufgewickelt. Am ersten Achsenende 15 ist stirnseitig ein Beschleunigungssensoren 24 angebracht zur Messung eines Körperschalls. Dem stirnseitig an der sich drehenden Achse 21 angebrachten Beschleunigungssensor 24 gegenüberliegend ist eine im Maschinenrahmen 30 gehaltene Auswerteeinheit 25 vorgesehen. Die Messwerte vom Beschleunigungssensor 24 werden dabei drahtlos an die Auswerteeinheit 25 übertragen. Gleichzeitig wird über ein elektromagnetisches Feld die für den Betrieb notwendige Energie an den Beschleunigungssensor 24 übertragen.

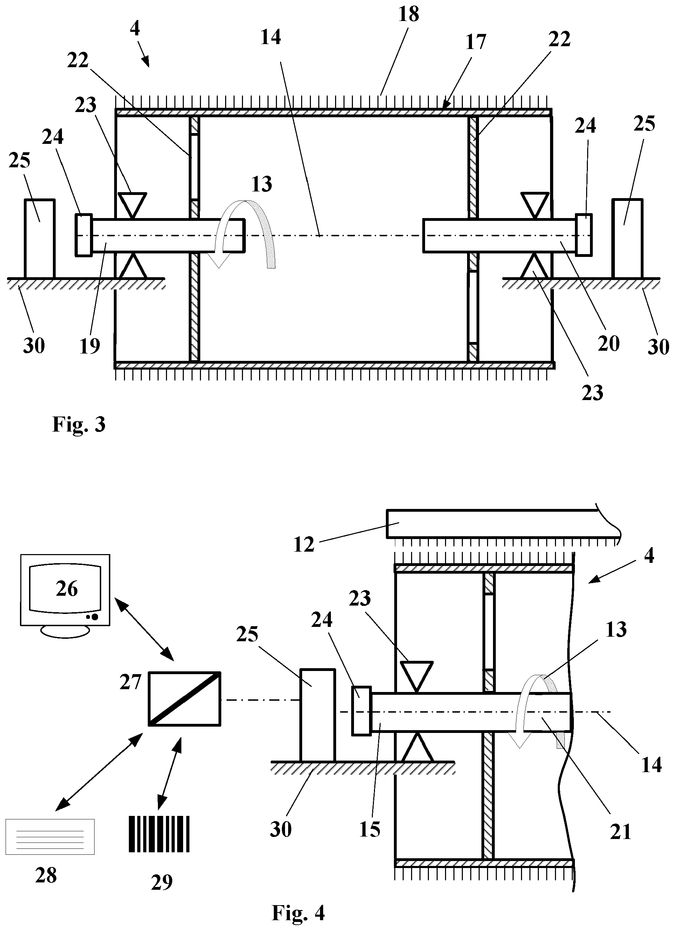

Figur 3 zeigt eine schematische Darstellung eines Tambours 4 nach der Erfindung in einer zweiten Ausführungsform. Der Tambour 4 ist als Hohlzylinder mit einer Längsachse 14 und einer äusseren Oberfläche 17 ausgebildet. Zur Stützung des Hohlzylinders sind zwei Speichen 22 in den Hohlzylinder eingebracht, welche den Hohlzylinder mit zwei innenliegenden in der Längsachse 14 angeordneten Achsstummeln 19 und 20 verbindet. An beiden Achsstummeln 19 und 20 ist eine Lagerung 23 des Tambours 4 vorgesehen. In diesen Lagern 23 ist der Tambour 4 in einem Maschinenrahmen 30 gehalten und dreht sich im Betrieb in Drehrichtung 13. Auf der äusseren Oberfläche 17 des Tambours ist eine Garnitur 18 aufgebracht. Am ersten Achsstummel 15 und am zweiten Achsstummel 16 ist stirnseitig jeweils ein Beschleunigungssensoren 24 angebracht zur Messung eines Körperschalls. Den stirnseitig an den sich drehenden Achsstummeln 19 und 20 angebrachten Beschleunigungssensoren 24 gegenüberliegend ist jeweils eine im Maschinenrahmen 30 gehaltene Auswerteeinheit 25 vorgesehen. Die Messwerte von den Beschleunigungssensoren 24 werden dabei drahtlos an die Auswerteeinheiten 25 übertragen. Gleichzeitig wird über ein elektromagnetisches Feld die für den Betrieb notwendige Energie an die Beschleunigungssensoren 24 übertragen.

Figur 4 zeigt eine schematische Darstellung einer Verfahrensanordnung nach der Erfindung. Der Tambour 4 ist in seiner Ausbildung und der Anordnung von Achse 21, Lagerung 23, Beschleunigungssensor 24, Auswerteeinheit 25 mit der Ausführungsform nach Figur 2 identisch, weshalb auf die Beschreibung nach Figur 2 verwiesen wird. Der Beschleunigungssensor 24 bewegt sich zusammen mit dem Tambour 4 in Drehrichtung 13 um die Längsachse 14. Die Messignale des Beschleunigungssensors 24 werden drahtlos an die im Maschinenrahmen 30 ortsfest gehaltenen Auswerteeinheit 25 übertragen. Drahtgebunden oder beispielsweise über WiFi werden die ausgewerteten Messignale von der Auswerteeinheit 25 zu einer Steuerung 27 übertragen.

Die Steuerung 27 ist mit einer Anzeige 26 und einer Eingabevorrichtung 28 verbunden. Die Anzeige 26 wird durch die Steuerung 27 aktiviert, sobald sich aus der Auswertung des Beschleunigungssensors 24 eine nicht erwartete Situation ergibt. Wenn beispielsweise ein Schallpegel überschritten wird, weil eine Berührung der Garnitur 18 mit einem der Garnitur 18 gegenüberliegenden Arbeitselement 12 erfolgt ist. Über eine Eingabevorrichtung 28 kann auf die in der Steuerung 27 hinterlegten Sollwerte respektive Grenzwerte der Körperschallmessung zugegriffen werden. Um eine Verbesserung der Körperschallmessung zu erreichen, können über die Eingabevorrichtung 28 die am Tambour 4 verwendeten Bauteile, wie beispielsweise des Garniturtyps der Garnitur 18 des Tambours 4, der Oberflächenstruktur der gegenüberliegenden Arbeitselemente 12 an die Steuerung 27 übermittelt werden. Weiter ist auch eine Eingabe von produktionsabhängigen Grössen, insbesondere der Produktionsrate, der Art und/oder der Feuchtigkeit der Fasern möglich. Bei einer weiter fortgeschrittenen Automation der Karde ist eine Erkennungseinrichtung 29 mit der Steuerung 27 verknüpft welche die eingesetzten Bauteile des Tambours 4 erkennt. Beispielsweise kann über eine Barcode-Erkennung bei einem Austausch von Arbeitselementen 12 deren Eigenschaften oder auch die Eigenschaften der zu verarbeitenden Fasern direkt in die Steuerung 27 eingelesen werden ohne dass die Eingabevorrichtung 28 genutzt werden muss.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Karde
- 2: Fasergut
- 3: Vorreisser
- 4: Tambour
- 5: Wanderdeckel
- 6: Abnehmer
- 7: Bandbildungseinheit
- 8: Faserband
- 9: Vorkardierzone
- 10: Nachkardierzone
- 11: Unterkardierzone
- 12: Arbeitselement
- 13: Drehrichtung
- 14: Längsachse Tambour
- 15: Erstes Ende der Achse
- 16: Zweites Ende der Achse
- 17: Oberfläche Tambour
- 18: Garnitur Tambour
- 19: Erster Achsstummel
- 20: Zweiter Achsstummel
- 21: Achse
- 22: Speiche
- 23: Lagerung
- 24: Beschleunigungssensor
- 25: Auswerteeinheit
- 26: Anzeige
- 27: Steuerung
- 28: Eingabevorrichtung
- 29: Erkennungseinrichtung
- 30: Maschinenrahmen

## Patentansprüche

1. Karde (1) mit einem Maschinenrahmen (30) und mit einer Steuerung (27) und mit einem auf seiner äusseren Oberfläche (17) mit einer Garnitur (18) versehenen Tambour (4) und mit Arbeitselementen (12) welche der äusseren Oberfläche (17) des Tambours (4) gegenüberliegend angeordnet sind, wobei der Tambour (4) in einer Längsachse (14) mit zwei Achsstummeln (19, 20) oder einer durchgehenden Achse (21) mit einem ersten Ende (15) und einem in der Längsachse (14) gegenüberliegenden zweiten Ende (16) ausgebildet ist, **dadurch gekennzeichnet, dass** an zumindest einem der Achsstummel (19, 20) oder an zumindest dem ersten Ende (15) der Achse (21) ein Beschleunigungssensor (24) zur Messung von Körperschall stirnseitig angebracht ist.

2. Karde (1) nach Anspruch 1, **dadurch gekennzeichnet, dass** am zweiten Achsstummel (19, 20) oder am zweiten Ende (16) der Achse (21) ein weiterer Beschleunigungssensor (24) angeordnet ist.

3. Karde (1) nach einem der vorherigen Ansprüche, **dadurch gekennzeichnet, dass** die Beschleunigungssensoren (24) einen Messbereich von 10kHz bis 500 kHz aufweisen.

4. Karde (1) nach Anspruch 3, **dadurch gekennzeichnet, dass** eine Auswertung in einem Bereich von 10 kHz bis 300 kHz vorgesehen ist.

5. Karde (1) nach einem der vorherigen Ansprüche, **dadurch gekennzeichnet, dass** eine Auswerteeinheit (25) vorgesehen ist, welche bei einem Überschreiten eines bestimmten Schallpegels eine Anzeige (26) zur Visualisierung und zur Weiterleitung eines Signals an die Steuerung (27) der Karde (1) vorgesehen ist.

6. Karde (1) nach Anspruch 5, **dadurch gekennzeichnet, dass** die Auswerteeinheit (25) am Maschinenrahmen (30) orts- und drehfest befestigt ist.

7. Karde (1) nach einem der Ansprüche 5 bis 6, **dadurch gekennzeichnet, dass** eine drahtlose Signal-Übertragung zwischen den Beschleunigungssensoren (24) und der Auswerteeinheit (25) vorgesehen ist.

8. Karde (1) nach einem der vorherigen Ansprüche, **dadurch gekennzeichnet, dass** eine Energiezuführung zu den Beschleunigungssensoren (24) eine induktive Energieübertragung vorgesehen ist.

9. Karde (1) nach einem der vorherigen Ansprüche, **dadurch gekennzeichnet, dass** die Karde (1) eine Einstelleinrichtung zur Veränderung der Position der gegenüberliegenden Arbeitselemente (12) aufweist.

10. Karde (1) nach einem der vorherigen Ansprüche, **dadurch gekennzeichnet, dass** die dem Tambour (4) gegenüberliegenden Arbeitselemente (12) als Messer, Leitbleche, Kardierelemente, Wanderdeckel oder garnierte Walzen ausgebildet sind.

11. Karde (1) nach einem der vorherigen Ansprüche, **dadurch gekennzeichnet, dass** eine Eingabeeinrichtung (28) und/oder eine Erkennungseinrichtung (29) zur Eingabe bzw. Erkennung des Garniturtyps der Garnitur (18) des Tambours (4), der Oberflächenstruktur der gegenüberliegenden Arbeitselemente (12), und/oder von produktionsabhängigen Grössen, insbesondere der Produktionsrate, der Art und/oder der Feuchtigkeit der Fasern, vorgesehen ist.

12. Verfahren zum Betreiben einer Karde (1), wobei die Karde (1) nach einem der vorherigen Ansprüche ausgebildet ist, **dadurch gekennzeichnet, dass** aus dem gemessenen Körperschall in einer Auswerteeinheit (25) ein Schallpegel gebildet wird und eine Berührung der Garnitur (18) des Tambours (4) mit dem gegenüberliegenden Arbeitselement (12) bestimmt wird.

13. Verfahren nach Anspruch 12, **dadurch gekennzeichnet, dass** bei einem Überschreiten eines oberen Grenzpegels oder bei einem Überschreiten einer bestimmten Dauer eines unteren Grenzpegels die Karde (1) ausgeschaltet wird.
